# EUROPÄISCHE PATENTSCHRIFT

(11) **EP 4 358 716 B1**
(45) Veröffentlichungstag und Bekanntmachung des Hinweises auf die Patenterteilung: **30.04.2025**
(21) Anmeldenummer: 22751267.0
(22) Anmeldetag: 09.06.2022
(51) Int. Cl.: A01M 29/32

(54) **VORRICHTUNG ZUR ABWEHR VON VÖGELN SOWIE ANORDNUNG**
DEVICE FOR PROTECTING AGAINST BIRDS, AND ARRANGEMENT
DISPOSITIF DE PROTECTION CONTRE LES OISEAUX ET AGENCEMENT

(30) Priorität: 25.06.2021 DE 202021002182 U
(43) Veröffentlichungstag der Anmeldung: 01.05.2024
(73) Patentinhaber: GSG Urbanguard GmbH, 16567 Muehlenbeck (DE)
(72) Erfinder: WIESENER, Mark, 16567 Mühlenbeck (DE)
(74) Vertreter: Hoffmann, Klaus-Dieter
(86) Internationale Anmeldenummer: PCT/DE2022/000063
(87) Internationale Veröffentlichungsnummer: WO 2022/268243

(56) Entgegenhaltungen:
- DE-A1- 102012 024 377
- DE-U1- 202017 005 880

## Beschreibung

### GEBIET

Die vorliegende Erfindung betrifft eine Vorrichtung zur Abwehr von Vögeln.

Ferner betrifft die vorliegende Erfindung eine Anordnung, die ein Objekt und mindestens eine Vorrichtung zur Abwehr von Vögeln umfasst.

### HINTERGRUND DER ERFINDUNG

Es hat sich durchgesetzt, speziell auf Schrägdächern zur Strom- und/oder Warmwassererzeugung Solarmodule vorzusehen. Derartige Module sind für gewöhnlich aufgeständert über der Dachoberfläche mit entsprechenden eingefassten Platten montiert. Hierbei wird zwischen den montierten Solarmodulen und der Dachoberfläche ein durchgehend freier Zwischenraum bzw. Freiraum einer Höhe von für gewöhnlich 10-16 cm, in einigen Fällen einer Höhe von mehr als 20 cm gebildet.

Diesen verhältnismäßig witterungsgeschützten freien Raum nutzten häufig verwilderte Haustauben als Schlaf- und Nistplatz, so dass neben einer störenden Geräuschkulisse auch Verkotung und Ungeziefer die Nutzung des Hauses negativ beeinträchtigen.

Es ist bekannt, Blechvorrichtungen aus Metall und Kunststoff oder Netzgewebe zu verwenden, um den Zugang zu den Bereichen unterhalb der Solarmodule zu versperren. Zur Verbesserung der Unterlüftung sowie der Ästhetik ist es zudem bekannt, vertikal an den Rändern der Solarmodule Metallstreifen anzubringen, die mit vertikal ausgerichteten punktverschweißten Metalldrähten unterschiedlicher Länge entsprechend dem jeweiligen Abstandes zwischen der Unterkante eines Solarmoduls und der Dachoberfläche versehen sind.

Da die unmittelbare Dachoberfläche häufig mit Dachziegeln bedeckt ist, die bauartbedingt gewellt gestaltet sein können und sich zudem in ihrer Anordnung überlappen, wodurch unterschiedlich hohe Abstände zwischen Dachoberfläche und jeweiliger Unterkante eines Solarmoduls bedingt sind, besteht Bedarf an einer flexiblen vertikalen Anpassung von Abwehrelementen zum Versperren der Bereiche unterhalb der Solarmodule gegen das Eindringen von Vögeln, insbesondere gegen das Eindringen von Tauben.

In der DE 10 2012 024 377 A1 wird eine Vorrichtung zur Abwehr von Vögeln, vorzugsweise von Tauben beschrieben, mit der verhindert werden soll, dass insbesondere Tauben sich in dem Zwischenraum zwischen Solar- oder Fotovoltaikmodulen und Gebäudedach niederlassen bzw. in diesem Zwischenraum nisten. Diese bekannte Vorrichtung ist mit wenigstens einem an einem Solar- oder Fotovoltaikmodul befestigbaren Träger versehen, an dem Halterungen vorgesehen sind, durch die Abwehrteile steckbar und am Träger zu sichern sind, um Vögel daran zu hindern, in den Zwischenraum zwischen den Solar- oder Fotovoltaikmodulen zu gelangen. In der DE 202017005880 U1 wird eine Vorrichtung gegen das Eindringen von Tieren in Zwischenräume unter Aufbauten an Objekten offenbart, wobei Stifte sich in einer mit entsprechenden Löchern versehenen Halterung befinden.

Abwehrteile in Form von aus Draht gebildeten Metallbügelpaaren können von einem Anwender nach der Anbringung des Befestigungsträgers an die Solarpaneleinfassung einzeln nach unten bis an die Dachoberfläche verschoben werden, wodurch eine angepasste Sperre zwischen Dachoberfläche und Solarmodul erhalten wird. Der Befestigungsträger stellt bei dieser Entwicklung die "Nulllinie" der Metallbügelpaare dar. Drahtlängen, die nicht absperrend nach unten verschoben werden, bleiben oberhalb des Befestigungsträgers und damit oberhalb des Solarmoduls stehen. Da der Befestigungsträger auch die einzige Stabilisierung bzw. Halterung für die Metallbügelpaare darstellt, gilt ferner folgendes:
Je größer der Abstand zwischen der Dachoberfläche und dem Befestigungsträger ist, desto elastischer bzw. biegsamer sind die Drahtenden der Metallbügelpaare. Somit können Vögel die Drahtenden von Metallbügelpaaren verbiegen bzw. deformieren und die durch die Metallbügelpaare gebildete Sperre überwinden.

Die Aufgabe der vorliegenden Erfindung besteht in der Bereitstellung einer Vorrichtung zur Abwehr von Vögeln gemäß dem Oberbegriff des Patentanspruchs 1, wobei eine mögliche Deformation von Abwehrelementen verhindert oder zumindest reduziert werden soll, so dass eine für Vögel unüberwindbare Sperre entsteht.

### ZUSAMMENFASSUNG DER ERFINDUNG

Die vorliegende Erfindung ist definiert durch die Merkmale des unabhängigen Patentanspruchs 1. Vorteilhafte Ausführungsformen der vorliegenden Erfindung gehen aus den abhängigen Patentansprüchen 2-18 hervor.

Gemäß einem ersten Aspekt der vorliegenden Erfindung wird eine Vorrichtung zur Abwehr von Vögeln bereitgestellt, mit wenigstens einem Befestigungsträger, an dem Halterungen vorgesehen sind, die von dem Befestigungsträger vorstehen und durch die jeweils ein einen Kopfteil aufweisendes Abwehrelement führbar ist, wobei die Halterungen von an dem Befestigungsträger parallel und mit Abstand zueinander gehalterten Führungshülsen gebildet sind, wobei jede Führungshülse einen Führungskanal mit einer Eintrittsöffnung und einer Austrittsöffnung aufweist, und wobei jeder Führungskanal zwischen der Eintrittsöffnung und der Austrittsöffnung eine Verengung des Querschnitts des Führungskanals aufweist, jedes Abwehrelement in der zugeordneten Führungshülse von deren Eintrittsöffnung bis maximal zu deren Verengung des Querschnitts frei fallend bis zum Stoppen des Falls des Abwehrelements durch Anlage seines Kopfteils an der Verengung des Querschnitts beweglich ist, und die parallel zueinander an dem Befestigungsträger gehalterten, jeweils zueinander benachbarten Führungshülsen zusätzlich durch mindestens einen Stabilisierungssteg miteinander verbunden sind, der vom Befestigungsträger beabstandet angeordnet ist.

Bestimmte Ausführungsformen des ersten Aspekts umfassen mindestens ein Merkmal aus der folgenden Liste:
- der mindestens eine Stabilisierungssteg befindet sich auf der Höhe der vom Befestigungsträger abgewandten Enden der Führungshülsen
- der mindestens eine Stabilisierungssteg ist parallel zum Träger ausgerichtet
- eine Vielzahl Stabilisierungsstege bildet eine durchgehende Stabilisierungsleiste
- die Abwehrelemente sind jeweils einen Kopfteil aufweisende stiftförmige Elemente
- die stiftförmigen Elemente sind jeweils aus Metall oder Kunststoff gebildet
- die Abwehrelemente sind jeweils einen Drahtkopf aufweisende Drähte
- die Drähte sind aus Metall gebildet
- die Führungshülsen sind senkrecht zu dem Befestigungsträger ausgerichtet
- die aus den jeweiligen Austrittsöffnungen der Führungshülsen herausragenden Abschnitte der in die Führungshülsen eingeführten Abwehrelemente bilden einen gegen seitliche Elastizität stabilisierenden Abwehrbereich
- der stabilisierende Abwehrbereich ist senkrecht zum Befestigungsträger ausgerichtet
- die Länge des gegen seitliche Elastizität stabilisierenden Abwehrbereiches in Bewegungsrichtung der Abwehrelemente ist bestimmt durch:
   ∘ den Längenabschnitt der über den Befestigungsträger vorstehenden Führungshülsen ab der Unterkante des Befestigungsträgers bis zur Verengung des Querschnitts des jeweiligen Führungskanals zuzüglich
   ∘ der Länge jedes an der Verengung des Querschnitts des jeweiligen Führungskanals fixierten und aus diesem herausragenden Abwehrelementes
- die Einführungsöffnungen der Führungshülsen sind jeweils durch einen Stopfen oder insgesamt durch eine Stopfleiste verschließbar, durch welche die in die Führungshülsen jeweils eingeführten Abwehrelemente gegen ein Herausfallen aus den Einführungsöffnungen der Führungshülsen zu sichern sind
- zwischen den an dem Befestigungsträger parallel und im Abstand zueinander angeordneten Führungshülsen sind Sollbruchstellen vorgesehen
- die Sollbruchstellen sind parallel zueinander vorgesehen
- die Führungshülsen sind aus UV-stabilisiertem Kunststoff gebildet
- die Vorrichtung umfasst 2 oder mehr parallele Führungshülsen
- eine Länge einer Führungshülse liegt im Bereich zwischen 5 cm und 15 cm
- eine Länge eines Abwehrelementes liegt im Bereich zwischen 5 cm und 15 cm
- eine Gesamt-Absperrhöhe ergibt sich aus der Summe der Länge der Führungshülse und der Länge des Abwehrelements
- die parallelen Führungshülsen sind in einem Abstand von 20 mm bis 50 mm, beispielsweise 25 mm, zueinander angeordnet

Gemäß einem zweiten Aspekt der vorliegenden Erfindung wird eine Anordnung bereitgestellt, die ein Objekt und mindestens eine Vorrichtung zur Abwehr von Vögeln gemäß einem der Patentansprüche 1-16 umfasst.

Gemäß bestimmten Ausführungsformen des zweiten Aspekts ist das Objekt ein Fotovoltaikmodul oder Solarmodul.

Beträchtliche Vorteile werden durch Ausführungsformen der vorliegenden Erfindung bereitgestellt. Die erfindungsgemäße Vorrichtung zur Abwehr von Vögeln passt sich aufgrund der innerhalb der Führungshülsen frei fallenden Abwehrelemente eigenständig an eine Dachkontur, beispielsweise an sich überlappende Dachziegel, an. Eine manuelle Justierung von einzelnen Abwehrelementen durch einen Anwender ist bei der Installation der Vorrichtung nicht erforderlich. Durch die Bereitstellung von Führungshülsen ist zudem eine freie Länge der Abwehrelemente zwischen der Dachoberfläche und den jeweiligen Enden der Führungshülsen verhältnismäßig gering. Durch die verhältnismäßig geringe freie Länge der Abwehrelemente wird ein Verbiegen bzw. Deformieren der Abwehrelemente durch einen Vogel verhindert oder zumindest erschwert. Somit stellt die erfindungsgemäße Vorrichtung eine für Vögel unüberwindbare Sperre dar, so dass der witterungsgeschützte freie Raum zwischen Solarmodul und Dachoberfläche nicht von Vögeln als Schlaf- und Nistplatz Verwendung finden kann. Eine negative Beeinträchtigung des Hauses kann somit verhindert werden.

Weitere Vorteile bestehen darin, dass mehrere erfindungsgemäße Vorrichtungen zum Schutz eines Objekts Verwendung finden können. Beispielsweise kann eine einzelne Vorrichtung insgesamt 2 oder mehr parallele parallele Führungshülsen aufweisen. Durch Aneinanderreihung einer Mehrzahl erfindungsgemäßer Vorrichtungen kann beispielsweise ein auf einem Dach abgeständertes Solarmodul rundum gegen Eindringen von Vögeln in den Zwischenbereich zwischen Dach und Solarmodul geschützt werden. Das rundum Anbringen der Vorrichtungen an das Solarmodul kann durch von den Vorrichtungen umfasste Sollbruchstellen begünstigt werden, die zwischen den an dem Befestigungsträger parallel und im Abstand zueinander angeordneten Führungshülsen vorgesehen sind.

### KURZBESCHREIBUNG DER ZEICHNUNGEN

FIG. 1 zeigt eine schematische Darstellung einer Vorrichtung zur Abwehr von Vögeln gemäß mindestens einigen Ausführungsformen der vorliegenden Erfindung,
FIG. 2 zeigt eine schematische Darstellung einer Anordnung zur Abwehr von Vögeln gemäß mindestens einigen Ausführungsformen der vorliegenden Erfindung, und
FIG. 3 zeigt eine schematische Darstellung einer anderen Anordnung gemäß mindestens einigen Ausführungsformen der vorliegenden Erfindung.

### AUSFÜHRUNGSFORMEN

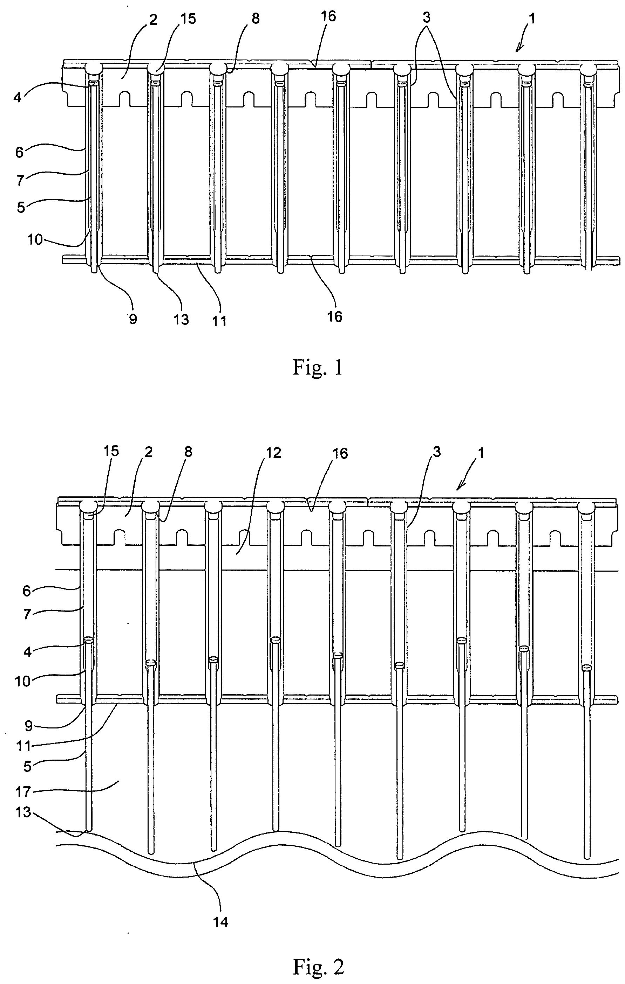

In FIG. 1 ist eine schematische Darstellung einer Vorrichtung 1 zur Abwehr von Vögeln gemäß mindestens einigen Ausführungsformen der vorliegenden Erfindung dargestellt. Die Vorrichtung 1 zur Abwehr von Vögeln kann an einem Objekt, beispielsweise an einem auf einem Dach eines Hauses aufgeständerten Solarmodul, befestigt werden. Bestimmte Ausführungsformen der vorliegenden Erfindung sind insbesondere zur Abwehr von Tauben geeignet.

Die Vorrichtung 1 weist wenigstens einen Befestigungsträger 2 auf, an dem Halterungen 3 vorgesehen sind, die von dem Befestigungsträger 2 vorstehen. Durch jede Halterung 3 ist jeweils ein einen Kopfteil 4 aufweisendes Abwehrelement 5 führbar. Gemäß der vorliegenden Erfindung sind die Halterungen 3 von an dem Befestigungsträger 2 parallel und mit Abstand zueinander gehalterten Führungshülsen 6 gebildet. Die Führungshülsen 6 sind senkrecht bzw. im Wesentlichen senkrecht zu dem Befestigungsträger 2 ausgerichtet. Jede Führungshülse 6 weist einen Führungskanal 7 mit einer Eintrittsöffnung 8 und einer Austrittsöffnung 9 auf. Zudem weist jeder Führungskanal 7 zwischen der Eintrittsöffnung 8 und der Austrittsöffnung 9 eine Verengung des Querschnitts 10 des Führungskanals 7 auf. Die Führungshülsen 6 können beispielsweise aus UV-stabilisiertem Kunststoff gebildet sein. Die Einführungsöffnungen 8 der Führungshülsen 6 können jeweils durch einen Stopfen 15 oder insgesamt durch eine Stopfleiste verschließbar sein. Hierdurch sind die in die Führungshülsen 6 jeweils eingeführten Abwehrelemente 5 gegen ein Herausfallen aus den Einführungsöffnungen 8 der Führungshülsen 6 zu sichern.

Jedes Abwehrelement 5 ist in der zugeordneten Führungshülse 6 von deren Eintrittsöffnung 8 bis maximal zu deren Verengung des Querschnitts 10 frei fallend bis zum Stoppen des Falls des Abwehrelements 5 durch Anlage seines Kopfteils 4 an der Verengung des Querschnitts 10 beweglich. Alternativ kann der freie Fall eines Abwehrelements 5 im Führungskanal 7 der Führungshülse 6 durch Anlage des dem Kopfteil 4 gegenüberliegenden Endes 13 an die Dachoberfläche zum Stoppen gebracht werden.

Die Abwehrelemente 5 können beispielsweise jeweils einen Kopfteil aufweisende stiftförmige Elemente sein. Die stiftförmigen Elemente können jeweils aus Metall oder Kunststoff gebildet sein. Alternativ können die Abwehrelemente 5 jeweils einen Drahtkopf aufweisende Drähte sein. Aus Draht gebildete Abwehrelemente 5 sind üblicherweise aus Metall. In Fig. 1 sind die Abwehrelemente 5 vor dem freien Fall entlang der Führungskanäle 7 gezeigt.

Die parallel zueinander an dem Befestigungsträger 2 gehalterten, jeweils zueinander benachbarten Führungshülsen 6 sind zusätzlich durch mindestens einen Stabilisierungssteg 11 miteinander verbunden. Der mindestens eine Stabilisierungssteg 11 ist vom Befestigungsträger 2 beabstandet angeordnet. Üblicherweise befindet sich der mindestens eine Stabilisierungssteg 11 auf der Höhe der vom Befestigungsträger 2 abgewandten Enden der Führungshülsen 6, um eine möglichst Stabile Vorrichtung bereitzustellen. Ferner ist der mindestens eine Stabilisierungssteg 11 üblicherweise parallel zum Träger ausgerichtet. Die Führungshülsen 6 können an einem einzelnen durchgehenden Stabilisierungssteg 11 befestigt sein oder alternativ kann jeweils zwischen zwei benachbarten Führungshülsen 6 ein Stabilisierungssteg 11 vorgesehen sein, so dass eine Vielzahl Stabilisierungsstege 11 eine durchgehende Stabilisierungsleiste bildet.

Zwischen den an dem Befestigungsträger 2 parallel und im Abstand zueinander angeordneten Führungshülsen 6 können Sollbruchstellen 16 vorgesehen sein, die parallel zueinander angeordnet sind. Entsprechend ist in einem solchen Fall auch der Stabilisierungssteg 11 bzw. die durchgehende Stabilisierungsleiste aus einer Vielzahl Stabilisierungsstege 11 mit Sollbruchstellen 16 zwischen den jeweiligen Führungshülsen 6 vorgefertigt. Hierdurch kann die Vorrichtung einfach in kleinere Einheiten unterteilt werden.

In FIG. 2 ist eine schematische Darstellung einer Anordnung zur Abwehr von Vögeln gemäß mindestens einigen Ausführungsformen der vorliegenden Erfindung dargestellt. Die in Fig. 1 gezeigte Vorrichtung ist an einem Objekt 12 befestigt worden. Das Objekt 12 ist beispielsweise ein über einer Dachoberfläche 14 aufgeständertes Solarmodul. Die gezeigte Dachoberfläche 14 ist nicht vollständig eben.

Bei Installation des Befestigungsträgers 2 am Objekt 12 fallen die innerhalb der Führungshülsen vorgesehenen Abwehrelemente 5 frei in ihre Abwehrposition. Jedes Abwehrelement der Vorrichtung 1 passt sich eigenständig an die Dachkontur an. Bei einigen Abwehrelementen 5 wird der freie Fall gestoppt durch Anlage des entsprechenden Kopfteils 4 an der Verengung des Querschnitts 10 des Führungskanals 7. Bei anderen Abwehrelementen wird der freie Fall gestoppt durch Anlage des Endes des Abwehrelementes 13 an die Dachoberfläche 14. Eine manuelle Justierung von einzelnen Abwehrelementen 5 durch einen Anwender ist bei der Installation der Vorrichtung 1 nicht erforderlich.

Die parallel zueinander angeordneten Abwehrelemente 5 verhindern das Eindringen eines Vogels in den Zwischenraum zwischen dem Objekt 12 und der Dachoberfläche 14

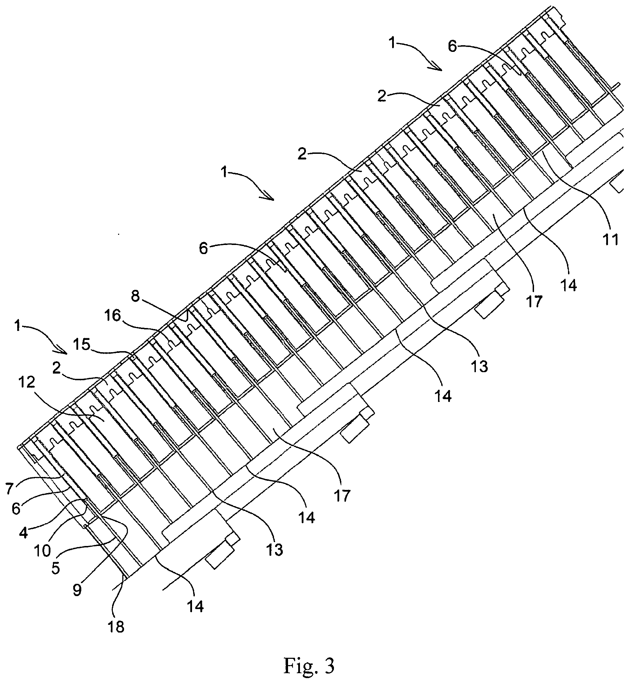

In FIG. 3 ist eine schematische Darstellung einer anderen Anordnung gemäß mindestens einigen Ausführungsformen der vorliegenden Erfindung dargestellt. Die Dachoberfläche 14 ist aus mehreren Dachziegeln gebildet, die sich gegenseitig überlappen. Auf dem Dach ist ein Objekt 12 mittels Ständern 18 von der Dachoberfläche 14 abgesetzt befestigt, so dass ein Zwischenraum 17 zwischen der Dachoberfläche 14 und dem Objekt 12 entsteht. An das Objekt 12 sind Befestigungsträger 2 mehrerer Vorrichtungen 1 zur Abwehr von Vögeln entsprechend Fig. 1 derart befestigt worden, dass der Zwischenraum 17 durch Aneinanderreihung von Vorrichtungen 1 umfänglich durch Abwehrelemente 5 versperrt ist. Das Objekt 12 kann beispielsweise ein Solarmodul oder eine Mehrzahl Solarmodule umfassen. Fig. 3 zeigt deutlich, dass sich die umfänglich angeordneten Abwehrelemente 5 jeweils eigenständig an die Kontur der Dachoberfläche 14 anpassen.

Aus Fig. 3 ist ebenfalls deutlich ersichtlich, dass eine freie Länge der Abwehrelemente 5 zwischen der Dachoberfläche 14 und den Austrittsöffnungen 9 der Führungshülsen 6 verhältnismäßig gering ist. Hierdurch wird ein Verbiegen bzw. Deformieren der Abwehrelemente 5 durch einen Vogel verhindert oder zumindest erschwert. Somit stellt die erfindungsgemäße Vorrichtung 1 eine für Vögel unüberwindbare Sperre dar, so dass der witterungsgeschützte Zwischenraum 17 zwischen Objekt 12 und Dachoberfläche 14 nicht von Vögeln als Schlaf- und Nistplatz Verwendung finden kann. Eine negative Beeinträchtigung des Hauses kann somit verhindert werden.

Sollten bei der Installation aneinandergereihter Vorrichtungen 1 Abwehrelemente 5 über den Umfang des Objekts 12 hinausstehen, können die Vorrichtungen 1 mittels der vorgesehenen Sollbruchstellen 16 entsprechend verkleinert worden, d.h. unbenötigte Abwehrelemente 5 können einfach abgetrennt und entfernt werden.

Es versteht sich, dass die Ausführungsformen der vorliegenden Erfindung nicht beschränkt sind auf die speziellen Strukturen oder Materialien, die hier offenbart sind, sondern die vorliegende Erfindung nur durch den Gegenstand der Ansprüche definiert ist. Die beschriebenen Merkmale, Strukturen oder Eigenschaften können in jeder geeigneten Weise in einer oder mehreren Ausführungsformen kombiniert werden, solange die Vorrichtung die Merkmale des Anspruchs 1 umfasst.

### BEZUGSZEICHENLISTE

- 1: Vorrichtung
- 2: Befestigungsträger
- 3: Halterungen
- 4: Kopfteil
- 5: Abwehrelement
- 6: Führungshülse
- 7: Führungskanal
- 8: Eintrittsöffnung
- 9: Austrittsöffnung
- 10: Verringerung des Querschnitts
- 11: Stabilisierungssteg
- 12: Objekt
- 13: Ende des Abwehrelements
- 14: Dachoberfläche
- 15: Stopfen
- 16: Sollbruchstelle
- 17: Zwischenraum
- 18: Ständer

## Patentansprüche

1. Vorrichtung (1) zur Abwehr von Vögeln, mit wenigstens einem Befestigungsträger (2), an dem Halterungen (3) vorgesehen sind, die von dem Befestigungsträger (2) vorstehen und durch die jeweils ein einen Kopfteil (4) aufweisendes Abwehrelement (5) führbar ist, **dadurch gekennzeichnet, dass**
- die Halterungen (3) von an dem Befestigungsträger (2) parallel und mit Abstand zueinander gehalterten Führungshülsen (6) gebildet sind, wobei jede Führungshülse (6) einen Führungskanal (7) mit einer Eintrittsöffnung (8) und einer Austrittsöffnung (9) aufweist, und wobei jeder Führungskanal (7) zwischen der Eintrittsöffnung (8) und der Austrittsöffnung (9) eine Verengung des Querschnitts (10) des Führungskanals (7) aufweist,
- jedes Abwehrelement (5) in der zugeordneten Führungshülse (6) von deren Eintrittsöffnung (8) bis maximal zu deren Verengung des Querschnitts (10) frei fallend bis zum Stoppen des Falls des Abwehrelements (5) durch Anlage seines Kopfteils (4) an der Verengung des Querschnitts (10) beweglich ist, und
- die parallel zueinander an dem Befestigungsträger (2) gehalterten, jeweils zueinander benachbarten Führungshülsen (6) zusätzlich durch mindestens einen Stabilisierungssteg (11) miteinander verbunden sind, der vom Befestigungsträger (2) beabstandet angeordnet ist.

2. Vorrichtung (1) nach Anspruch 1, **dadurch gekennzeichnet, dass** sich der mindestens eine Stabilisierungssteg (11) auf der Höhe der vom Befestigungsträger (2) abgewandten Enden der Führungshülsen (6) befindet.

3. Vorrichtung (1) nach Anspruch 1 oder 2, **dadurch gekennzeichnet, dass** der mindestens eine Stabilisierungssteg (11) parallel zum Träger ausgerichtet ist.

4. Vorrichtung (1) nach einem der Ansprüche 1 - 3, **dadurch gekennzeichnet, dass** eine Vielzahl Stabilisierungsstege (11) eine durchgehende Stabilisierungsleiste bildet.

5. Vorrichtung (1) nach einem der Ansprüche 1 - 4, **dadurch gekennzeichnet, dass** die Abwehrelemente (5) jeweils einen Kopfteil aufweisende stiftförmige Elemente sind.

6. Vorrichtung (1) nach Anspruch 5, **dadurch gekennzeichnet, dass** die stiftförmigen Elemente jeweils aus Metall oder Kunststoff gebildet sind.

7. Vorrichtung (1) nach einem der Ansprüche 1 - 4, **dadurch gekennzeichnet, dass** die Abwehrelemente (5) jeweils einen Drahtkopf aufweisende Drähte sind.

8. Vorrichtung (1) nach einem der Ansprüche 1 - 7 **dadurch gekennzeichnet, dass** die Führungshülsen (6) senkrecht zu dem Befestigungsträger (2) ausgerichtet sind.

9. Vorrichtung (1) nach einem der Ansprüche 1 - 8, **dadurch gekennzeichnet, dass** die aus den jeweiligen Austrittsöffnungen (9) der Führungshülsen (6) herausragenden Abschnitte der in die Führungshülsen (6) eingeführten Abwehrelemente (5) einen gegen seitliche Elastizität stabilisierenden Abwehrbereich bilden.

10. Vorrichtung (1) nach Anspruch 9, **dadurch gekennzeichnet, dass** der stabilisierende Abwehrbereich senkrecht zum Befestigungsträger ausgerichtet ist.

11. Vorrichtung (1) nach Anspruch 9 oder 10, **dadurch gekennzeichnet,** das die Länge des gegen seitliche Elastizität stabilisierenden Abwehrbereiches in Bewegungsrichtung der Abwehrelemente (5) bestimmt ist durch:
- den Längenabschnitt der über den Befestigungsträger (2) vorstehenden Führungshülsen (6) ab der Unterkante des Befestigungsträgers (2) bis zur Verengung des Querschnitts (10) des jeweiligen Führungskanals (7) zuzüglich
- der Länge jedes an der Verengung des Querschnitts (10) des jeweiligen Führungskanals (7) fixierten und aus diesem herausragenden Abwehrelementes (5).

12. Vorrichtung (1) nach einem der Ansprüche 1 - 11, **dadurch gekennzeichnet, dass** die Einführungsöffnungen (8) der Führungshülsen (6) jeweils durch einen Stopfen (15) oder insgesamt durch eine Stopfleiste verschließbar sind, durch welche die in die Führungshülsen (6) jeweils eingeführten Abwehrelemente (5) gegen ein Herausfallen aus den Einführungsöffnungen (8) der Führungshülsen (6) zu sichern sind.

13. Vorrichtung (1) nach einem der Ansprüche 1 - 12, **dadurch gekennzeichnet, dass** zwischen den an dem Befestigungsträger (2) parallel und im Abstand zueinander angeordneten Führungshülsen (6) Sollbruchstellen (16) vorgesehen sind.

14. Vorrichtung (1) nach Anspruch 13, **dadurch gekennzeichnet, dass** die Sollbruchstellen (16) parallel zueinander vorgesehen sind.

15. Anordnung umfassend ein Objekt (12) und mindestens eine Vorrichtung (1) zur Abwehr von Vögeln gemäß einem der Ansprüche 1-14.

16. Anordnung nach Anspruch 15, wobei das Objekt (12) ein Fotovoltaikmodul oder Solarmodul ist.

## Claims

1. A device (1) for protecting against birds, which has at least one fastening support (2) on which holders (3) are provided, which holders protrude from the fastening supports (2) and through each of which holders a protection element (5), comprising a head part (4), can be guided, **characterized in that**:
- the holders (3) are formed by guide sleeves (6), which are held on the fastening support (2) in parallel and at a distance from one another, wherein each guide sleeve (6) comprises a guide channel (7) having an entry opening (8) and an exit opening (9), wherein each guide channel (7) has a narrowing of the cross section (10) of the guide channel (7) between the entry opening (8) and the exit opening (9),
- each protection element (5) can be moved, in a free falling manner, in the associated guide sleeve (6) from the entry opening (8) thereof at most to the narrowing of the cross section (10) thereof until the fall of the protection element (5) is stopped by the head part (4) thereof resting against the narrowing of the cross section (10), and
- adjacent guide sleeves (6), which are held in parallel with one another on the fastening support (2), are further interconnected by at least one stabilizing connection piece (11) that is spaced apart from the fastening support (2).

2. The device (1) according to claim 1, **characterized in that** the at least one stabilizing connection piece (11) is located at the height of the end of the guide sleeves (6) facing away from the fastening support (2).

3. The device (1) according to claim 1 or 2, **characterized in that** the at least one stabilizing connection piece (11) is oriented parallel to the support.

4. The device (1) according to one of claims 1 - 3, **characterized in that** a plurality of stabilizing connection pieces (11) form a throughgoing stabilizing strip.

5. The device (1) according to one of claims 1 - 4, **characterized in that** the protection elements (5) are pin-shaped elements, each comprising a head part.

6. The device (1) according to claim 5, **characterized in that** the pin-shaped elements are in each case made of metal or plastic.

7. The device (1) according to one of claims 1 - 4, **characterized in that** the protection elements (5) are wires, each comprising a wire head.

8. The device (1) according to one of claims 1 - 7, **characterized in that** the guide sleeves (6) are oriented perpendicular to the fastening support (2).

9. The device (1) according to one of claims 1 - 8, **characterized in that** the portions of the protection elements (5) inserted into the guide sleeves (6) and protruding from the respective exit openings (9) of the guide sleeves (6) form a stabilizing protection region preventing lateral elasticity.

10. The device (1) according to claim 9, **characterized in that** the stabilizing protection region is oriented perpendicular to the fastening support.

11. The device (1) according to claim 9 or 10, **characterized in that** the length of the stabilizing protection region that prevents lateral elasticity is, in the direction of motion of the protection elements (5), determined by:
- the lengthwise portion of the guide sleeves (6) protruding over the fastening supports (2) from the lower edge of the guide sleeve (2) to the narrowing of the cross section (10) of the respective guide channel (7) in addition to:
- the length of each protection element (5) affixed to the narrowing of the cross section (10) of the respective guide channel (7) and protruding therefrom.

12. The device (1) according to one of claims 1 - 11, **characterized in that** the entry openings (8) of the guide sleeves (6) can in each case be closed by a plug (15), or all of them closed by a plug strip, by means of which the securing elements (5) inserted into the guide sleeves (6) are in each case prevented from falling out of the insertion openings (8) of the guide sleeves (6).

13. The device (1) according to one of claims 1 - 12, **characterized in that** predetermined breaking points (16) are provided between the guide sleeves (6), which are arranged on the fastening supports (2) in parallel and at a distance from one another.

14. The device (1) according to claim 13, **characterized in that** the predetermined breaking points (16) are provided parallel to one another.

15. An arrangement comprising one object (12) and at least one device (1) for protection against birds according to one of claims 1-14.

16. The arrangement according to claim 15, wherein the object (12) is a photovoltaic module or a solar module.

## Revendications

1. Dispositif (1) de protection contre les oiseaux, comprenant au moins un support de fixation (2) sur lequel sont prévus des éléments de retenue (3) qui font saillie du support de fixation (2) et à travers lesquels peut être guidé un élément de protection (5) comprenant une partie tête (4), **caractérisé en ce que**
- les éléments de retenue (3) sont formés par des manchons de guidage (6) maintenus parallèlement et à distance les uns des autres sur le support de fixation (2), chaque manchon de guidage (6) comprenant un canal de guidage (7) avec une ouverture d'entrée (8) et une ouverture de sortie (9), et chaque canal de guidage (7) comprenant, entre l'ouverture d'entrée (8) et l'ouverture de sortie (9), un rétrécissement de la section transversale (10) du canal de guidage (7),
- chaque élément de protection (5) est mobile dans la manchon de guidage (6) associé, depuis son ouverture d'entrée (8) jusqu'au maximum de son rétrécissement de la section transversale (10), en tombant librement jusqu'à ce que la chute de l'élément de protection (5) s'arrête par l'appui de sa partie tête (4) sur le rétrécissement de la section transversale (10), et
- les manchons de guidage (6) maintenus parallèlement les uns aux autres sur le support de fixation (2) et respectivement adjacents les uns des autres sont en outre reliés entre eux par au moins une entretoise de stabilisation (11) qui est agencée à distance du support de fixation (2).

2. Dispositif (1) selon la revendication 1, **caractérisé en ce que** l'au moins une entretoise de stabilisation (11) se situe à la hauteur des extrémités des manchons de guidage (6) opposées au support de fixation (2).

3. Dispositif (1) selon la revendication 1 ou 2, **caractérisé en ce que** l'au moins une entretoise de stabilisation (11) est alignée parallèlement au support.

4. Dispositif (1) selon l'une quelconque des revendications 1 à 3, **caractérisé en ce qu'**une pluralité d'entretoises de stabilisation (11) forme une barre de stabilisation continue.

5. Dispositif (1) selon l'une quelconque des revendications 1 à 4, **caractérisé en ce que** les éléments de protection (5) sont des éléments en forme de tige comprenant chacun une partie tête.

6. Dispositif (1) selon la revendication 5, **caractérisé en ce que** les éléments en forme de tige sont chacun formés en métal ou en plastique.

7. Dispositif (1) selon l'une quelconque des revendications 1 à 4, **caractérisé en ce que** les éléments de protection (5) sont des fils métalliques comprenant une tête de fil.

8. Dispositif (1) selon l'une quelconque des revendications 1 à 7, **caractérisé en ce que** les manchons de guidage (6) sont alignés perpendiculairement au support de fixation (2).

9. Dispositif (1) selon l'une quelconque des revendications 1 à 8, **caractérisé en ce que** les sections des éléments de protection (5) insérées dans les manchons de guidage (6) qui font saillie des ouvertures de sortie (9) respectives des manchons de guidage (6) forment une zone de protection stabilisatrice vis-à-vis de l'élasticité latérale.

10. Dispositif (1) selon la revendication 9, **caractérisé en ce que** la zone de protection stabilisatrice est alignée perpendiculairement au support de fixation.

11. Dispositif (1) selon la revendication 9 ou 10, **caractérisé en ce que** la longueur de la zone de protection stabilisatrice vis-à-vis de l'élasticité latérale dans la direction de mouvement des éléments de protection (5) est déterminée par :
- la section longitudinale des manchons de guidage (6) faisant saillie du support de fixation (2), mesurée depuis le bord inférieur du support de fixation (2) jusqu'au rétrécissement de la section transversale (10) du canal de guidage (7) respectif, plus
- la longueur de chaque élément de protection (5) fixé au rétrécissement de la section (10) du canal de guidage (7) respectif et faisant saillie à partir de celui-ci.

12. Dispositif (1) selon l'une quelconque des revendications 1 à 11, **caractérisé en ce que** les ouvertures d'insertion (8) des manchons de guidage (6) peuvent être fermées chacune par un bouchon (15) ou en totalité par une bande de bouchage, par l'intermédiaire de laquelle les éléments de protection (5) respectifs insérés dans les manchons de guidage (6) sont sécurisés contre une chute des ouvertures d'insertion (8) des manchons de guidage (6).

13. Dispositif (1) selon l'une quelconque des revendications 1 à 12, **caractérisé en ce que** des points de rupture (16) sont prévus entre les manchons de guidage (6) agencés parallèlement et à distance les uns des autres sur le support de fixation (2).

14. Dispositif (1) selon la revendication 13, **caractérisé en ce que** les points de rupture (16) sont prévus parallèlement les uns aux autres.

15. Agencement comprenant un objet (12) et au moins un dispositif (1) de protection contre les oiseaux selon l'une quelconque des revendications 1 à 14.

16. Agencement selon la revendication 15, dans lequel l'objet (12) est un module photovoltaïque ou un module solaire.
